# EUROPEAN PATENT APPLICATION

(11) **EP 2 444 708 A1**
(43) Date of publication of application: **25.04.2012**
(21) Application number: 10789040.2
(22) Date of filing: 01.06.2010
(51) Int. Cl.: F16L 37/092

(54) **ACCESSORY FOR CONNECTING TUBES BY SLIDING**

(30) Priority: 15.06.2009 ES 200930181 U
(71) Applicant: Multitubo Montaje Y Distribución, S.L., 45950 Casarrubios del Monte (Toledo) (ES)
(72) Inventor: GUTIÉRREZ PÉREZ, Román, E-45950 Casarrubios del Monte (Toledo) (ES)
(74) Representative: Munoz Garcia, Antonio
(86) International application number: PCT/ES2010/070367
(87) International publication number: WO 2010/146207

(57) **Abstract**

The accessory is based on a bushing formed by two parts (12 and 13) and an inner ring (15), the latter having a frustoconical outer shape, while inside it has a serrated annular protuberance (16). The two parts (12 and 13) are coupled together by means of a screw thread (17), such that the assembly is retained by the insertion of a flange (18) of the part (12) in a recess made for that purpose in an inner element called a nipple that is used in known push-fit coupling systems, on the basis of which coupling takes place by sliding.

## Description

### Object of the Invention

The present invention relates to an accessory for coupling tubes by sliding, the evident purpose of which is to serve as a means for coupling, with or without the collaboration of a clamping tool, tubes provided for fluid circulation which can essentially be applied in the plumbing, heating, gas, and air conditioning sectors, etc.

The object of the invention is to achieve greater efficiency and simplicity in the operation for coupling the accessory and a tube, allowing its application in known push-fit coupling systems.

### Background of the Invention

In couplings known as push-fit, i.e., couplings of tubes in accessories by sliding, there is an inner tubular element called nipple the tube is adjusted thereon, being complemented with an outer element performing the functions of a bushing fixable to the nipple, there being an axial concentric passage between the two elements precisely in which the tube to be coupled will be located.

Furthermore, the bushing is usually complemented with one or several serrated inner rings by means of which the tube coupled in the accessory is fixed or immobilized, without the need for any tool.

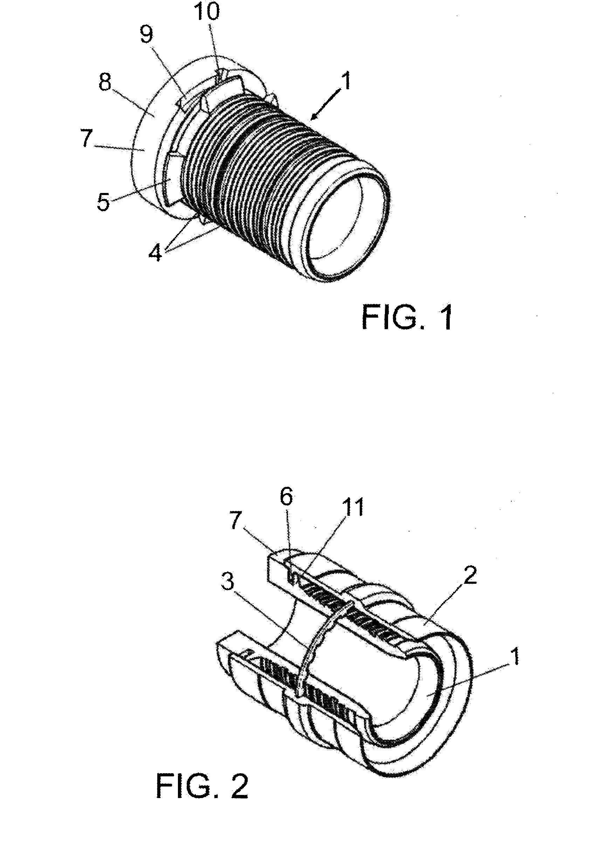

In this sense it is possible to mention Utility Model ES 1069889 U, which will be described based on Figures 1 and 2 accompanying the remaining figures corresponding to the accessory of the invention.

In the aforementioned background document Utility Model ES 1069889 U, in addition to the nipple (1) and the bushing (2), as basic elements, the invention includes an inner serrated ring or collar (3), the nipple (1) in turn externally having an annular serration (4), and flanges (5) in an annular arrangement angularly equidistant from each other in correspondence with its back end, forming the securing means for the bushing (2), the interlocking or fixing taking place by means of counter-flanges (6) forming part of the bushing (2) itself. Those counter-flanges (6) initially pass between the flanges (5) of the nipple (1) so that when the counter-flanges reach the end of the flanges, one of the elements is fixed with respect to the other and the two are thus retained and fixed, i.e., between the nipple (1) and the bushing (2), because the counter-flanges (6) are interlocked between the flanges (5) of the nipple (1) and the end lip (7) formed at the back end of such nipple (1). As can be seen in Figure 1, recesses (8) are formed between the flanges (5), while in correspondence with the inner portion of the back lip (3) a recessed sector with a slope (9) ending in a slot (10) is formed, such that a projection (11) provided for that purpose in the bushing (2) is located at the start of the recess, i.e., at the start of the slope (9), and by means of rotating the former the projection (11) slides along such slope (9) until reaching the slot defining the respective gap (8), the bushing (2) being thereby installed.

In this coupling system by sliding, two or more collars (3) housed inside the bushing (2) are used, having to withstand the considerable tensile stress to which the accessory will be subjected, with the particularity that based on using these serrated metal collars (3), the rigidity of the system sometimes prevents being able to perform an effective coupling or at least without considerable stresses.

### Description of the Invention

The proposed accessory based on that provided in the preceding section, i.e., on the use of the nipple, has been modified in the sense that the serrated metal collar or ring has been replaced with an elastic ring with an inner serrated annular step, and an outer frustoconical configuration, being complemented with an outer bushing formed, in this case, by two bodies coupled together, one of which has an inner frustoconical surface for being adjusted on the outer surface of the aforementioned ring and thereby establishing the fixing after coupling by sliding the corresponding tube between the bushing formed by the two bodies coupled by threading and the inner nipple.

In other words, in this case it is much easier to insert the tube than with the accessory described in the preceding section because the ring is made of a plastic material with certain elasticity, and therefore softer than the serrated ring made of steel, so when inserting the tube, the plastic ring deforms more easily and therefore offers greater strength, thereby reducing the force necessary to insert the tube.

The serrated rib annularly included inside the mentioned ring will be driven into the outer surface of the tube, preventing the backward movement thereof and the tube therefore being fixed inside the ring.

### Description of the Drawings

To complement the following description and for the purpose of aiding to better understand the features of the invention according to a preferred practical embodiment thereof, a set of drawings is attached as an integral part of said description in which the following has been depicted with an illustrative and non-limiting character:
Figures 1 and 2 show, as stated in the background section of the invention, a perspective view of the nipple and a view of the coupling of such nipple to the bushing, corresponding to coupling by sliding, defining the state of the art.
Figure 3 shows an exploded view of the parts and inner elastic ring participating in the accessory for coupling tubes object of the invention.
Figure 4 finally shows a sectional view of the accessory forming the attachment of a tube, carried out according to the object of the invention.

### Preferred Embodiment of the Invention

As can be seen in Figures 1 and 2, the conventional accessory is formed from a nipple (1) which is a tubular body open at the two ends with its side surface (2) being annularly serrated, its back end having a lip (7) of considerable width and before such lip flanges (5) between which respective gaps (8) are formed, as can be clearly seen in Figure 1.

In the inner portion of the lip (7) and affecting a sector thereof, the recess has been provided in a slope (9) ending in the slot (10).

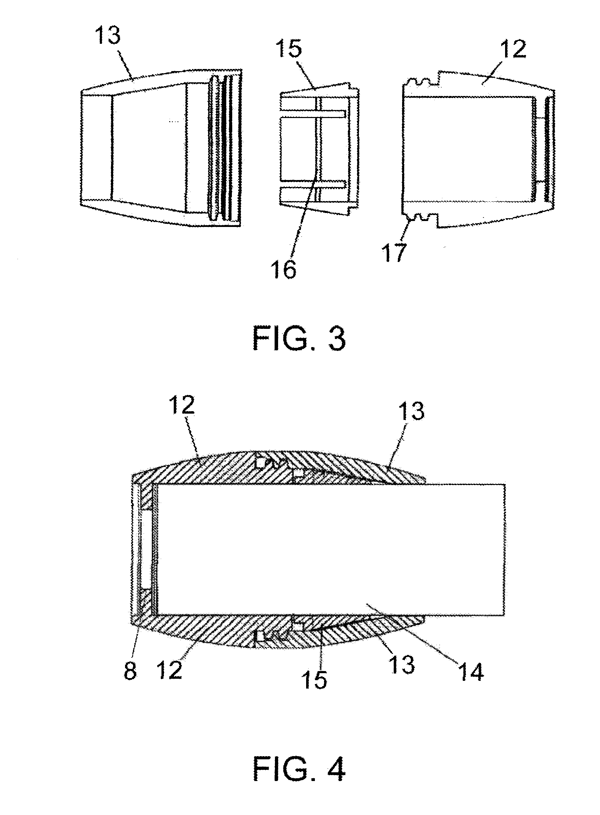

From this nipple described in the Utility Model of the prior art, the novelty of the invention consists of fixing the corresponding tube (14) to be coupled, depicted in Figure 4 by means of a bushing formed by two parts (12 and 13) and an inner ring (15), such that the latter is externally frustoconical shaped and internally provided with a serrated annular rib (16).

In turn, the two parts (12 and 13) forming the bushing are coupled together by means of a screw thread (17), the assembly being retained, through part (12), against the nipple by inserting a counter-flange (18) of that part (12) in the recess formed behind the flanges of the nipple.

According to these features, the coupling is as follows:

Once the tube (14) to be coupled is placed on the neck formed by the nipple and the bushing formed by the parts (12 and 13) screwed together and interlocked on the nipple, with the inner arrangement of the ring (15), is coupled, the screw thread of part (13) on part (12) entails pressing the ring (15) on the tube (12), the serrated rib of such ring (15) being driven into the tube (14), such that in the event that the latter becomes decoupled and takes the ring (15) with it, pressure will be exerted against the inner taper of part (13), as depicted in Figure 4, which will prevent the outward movement of the tube (14) with the ring (15). In other words, the diameter of the ring (15) is gradually reduced when there is an attempt to move the tube (14) outwardly, forming a greater gripping force on said tube, greater tensile strength being necessary to destroy the system.

Although the taper between the ring (15) and the inner portion of the part (13) can be variable, a tape of about 10° is considered appropriate.

The bushing forming the parts (12 and 13) can be disassembled by simply unscrewing the part (13) and once it has been removed, the tube (14) will be secured only by the plastic ring (15) which has in turn been released by removing the stop of the assembly from the bushing, therefore being able to remove the tube from its coupling, such that once said tube (14) has been removed, the part (12) can be disassembled from the bushing and the plastic ring (15) removed, the attachment being undone and being able to use the accessory again.

## Claims

1. An accessory for coupling tubes by sliding, which, being applicable in those systems in which the attachment takes place by sliding the corresponding tube between an inner nipple in which an outer pressure-applying bushing can be interlocked on the tube itself with the collaboration of a ring, **characterized in that** the outer bushing is formed by two parts (12 and 13) externally coupled together by means of a screw thread (17), one of which parts has a counter-flange (18) interlocking on the corresponding nipple, while the other part internally has a taper complementary to another taper made externally on an inner plastic ring (15) arranged between the two parts (12 and 13 ) and pressed on the tube (14) to be attached.

2. The accessory for coupling tubes by sliding according to claim 1, **characterized in that** the inner plastic ring (15) having a frustoconical outer shape internally has a serrated annular protuberance for being driven into the outer surface of the tube (14) to be attached.

3. The accessory for coupling tubes by sliding according to the preceding claims, **characterized in that** the complementary frustoconical configuration between the inner portion of one of the parts (12 and 13) of the outer bushing and the outer surface of the inner ring (15) provide gradually increasing pressure on the tube (14) to be attached while the latter is being pulled outwardly.

## Amended claims

### Amended claims under Art. 19.1 PCT

**1.** An accessory for coupling tubes by sliding, **characterized in that** such accessory includes a conventional nipple (1), of the type used in push fit-type tube couplings, having a tubular configuration, externally having an annular serration (4), incorporating flanges (5) provided in an annular arrangement angularly equidistant from each other in correspondence with its back end, recesses (8) being defined between the flanges (5), while in correspondence with the inner portion of the back lip (3) there is arranged at least one recessed sector with a slope (9) ending in a slot (10), a nipple intended for being internally coupled to the tube to be coupled and complemented with an outer bushing, formed by two parts (12 and 13) coupled together externally by means of a screw thread (17), one of which parts has at least one counter-flange (18) interlocking on the slot (10) of the corresponding nipple, while the other part internally has a taper complementary to another taper made externally on an inner plastic ring (15) arranged between the two parts (12 and 13) and pressed on the tube (14) to be attached.

**2.** The accessory for coupling tubes by sliding according to claim 1, **characterized in that** the inner plastic ring (15) having a frustoconical outer shape internally has a serrated annular protuberance for being driven into the outer surface of the tube (14) to be attached.

**3.** The accessory for coupling tubes by sliding according the preceding claims, **characterized in that** the complementary frustoconical configuration between the inner portion of one of the parts (12 and 13) of the outer bushing and the outer surface of the inner ring (15) provide gradually increasing pressure on the tube (14) to be attached while the latter is being pulled outwardly.
